# FASCICULE DE BREVET EUROPEEN

(11) **EP 1 454 376 B1**
(45) Date de publication et mention de la délivrance du brevet: **07.11.2007**
(21) Numéro de dépôt: 02770030.1
(22) Date de dépôt: 16.07.2002
(51) Int. Cl.: H01M 10/54

(54) **RECYCLAGE DES PILES ELECTRIQUES USAGEES PAR TRAITEMENT HYDROMETALLURGIQUE**
RECYCLING BENUTZTER ELEKTRISCHER ZELLEN DURCH HYDROMETALLURGISCHE BEHANDLUNG
RECYCLING USED ELECTRIC CELLS BY HYDROMETALLURGICAL TREATMENT

(30) Priorité: 23.07.2001 FR 0109791
(43) Date de publication de la demande: 08.09.2004
(73) Titulaire: Recupyl S.A., 38420 Domène (FR)
(72) Inventeur: TEDJAR, Farouk, F-38000 Grenoble (FR)
(74) Mandataire: Hecké, Gérard
(86) Numéro de dépôt international: PCT/FR2002/002522
(87) Numéro de publication internationale: WO 2003/021708

(56) Documents cités:
- EP-A- 0 620 607
- EP-A- 0 652 603
- PATENT ABSTRACTS OF JAPAN vol. 018, no. 004 (C-1149), 6 janvier 1994 (1994-01-06) & JP 05 247554 A (TSUKISHIMA KIKAI CO LTD), 24 septembre 1993 (1993-09-24)
- DATABASE EPODOC [en ligne] EUROPEAN PATENT OFFICE, THE HAGUE, NL; XP002195317 & ES 2 134 725 A (R F PROCES SA ; TECNICAS REUNIDAS S A) 1 octobre 1999 (1999-10-01)
- PATENT ABSTRACTS OF JAPAN vol. 011, no. 143 (E-504), 9 mai 1987 (1987-05-09) & JP 61 281467 A (KIRESUTO GIKEN:KK), 11 décembre 1986 (1986-12-11)

## Description

La présente invention est un perfectionnement apporté au brevet EP 0620 607 B1 (RECUPYL SA) qui concerne un procédé de traitement hydrométallurgique de piles usagées permettant la récupération des éléments valorisables.

Dans les déchets urbains, les piles et batteries électriques sont reconnues comme sources de produits toxiques nécessitant un traitement particulier. Le recyclage des différentes batteries au plomb et au nickel-cadmium est effectué depuis longtemps et conduit au recyclage du plomb et du nickel réutilisable notamment dans les fonderies de seconde fusion.

Le traitement des piles est plus complexe, du fait que leur composition et leur forme sont très variées. Plusieurs procédés ont été proposés.

EP-A-409792 décrit un procédé de production simultanée de dioxyde de manganèse et de zinc par électrolyse de la solution obtenue en traitant par un solvant acide contenant de l'acide tétra fluoroborique, des composés tels que des oxydes de manganèse ou de zinc, des halogénures de zinc ou du zinc métallique, ce procédé pouvant être appliqué au traitement de piles usagées ayant subi une calcination à 550°C en atmosphère inerte.

JP-60096734 décrit un procédé de traitement pour la récupération d'éléments valorisables à partir de piles usagées, dans lequel les piles sont d'abord broyées, puis chauffées à 500°C et ensuite soumises à un traitement chloro-ammoniacal, puis calcinées. Ces procédés nécessitent toutefois une étape de calcination qui rend les opérations longues et coûteuses. Généralement les procédés de traitement thermique ou pyrométallurgique opèrent à des températures comprises entre 600 et 750°C pour récupérer le mercure. Des températures de 1500°C sont même signalées. Ces procédés thermiques, calés sur la récupération quantitative du mercure sont appelés à devenir, à terme, obsolètes. En outre la composition très complexe des lots de piles conduit à des problèmes de qualité de matériaux élaborés. En particulier les ferromanganèses sont pollués par du cuivre. Enfin l'utilisation de chlorures limite considérablement le champ de valorisation des produits sortants.

Les procédés hydrométallurgiques sont plus adaptés au traitement sans transfert de pollution et à une meilleure valorisation des matériaux contenus dans les matrices de piles.
Il est important de noter que les composants majoritaires des piles sont fabriqués par voie hydrométallurgique (électrolyse du zinc et préparation chimique ou électrochimique du dioxyde de manganèse). Ces voies évoluent en milieu acide et fonctionnent depuis de nombreuses années à l'échelle industrielle sur des quantités s'exprimant en dizaine de milliers de tonnes.

Il est évident que la voie acide permet d'accéder à toute impureté présente dans les piles.
Des filières alcalines sont à proscrire dans la mesure où seul le zinc est soluble en milieu alcalin. Cette solubilité est toutefois atteinte pour des concentrations élevées en réactifs basiques et à une température supérieure à 95°C.

Le traitement alcalin permet d'atteindre le zinc mais laisse la masse cathodique quasiment intacte dans la mesure ou les espèces du manganèse de valence (II), le mercure et les hydroxydes de mercure, d'indium, de nickel ou de cadmium sont très peu solubles en milieu basique.
Seule une nouvelle attaque acide réductrice analogue à celle décrite dans EP 0 620 607 B1 (RECUPYL SA) permettrait d'atteindre la totalité des composés.

Mais cette nouvelle attaque, si elle venait à être effectuée à la suite d'un procédé alcalin, exigerait des quantités de réactifs très importantes en raison de la nécessité de neutraliser la masse noire, gorgée d'un réactif fortement basique (de la soude par exemple).

Cette neutralisation suivie d'une dissolution acide réductrice pour attaquer les composés bi et trivalents du manganèse s'accompagne de production de grandes quantités de sels de sodium dont l'élimination ou la valorisation est déjà problématique dans d'autres domaines de traitement de déchets.

Le présent perfectionnement répond d'une manière favorable à tous ces inconvénients et grâce à un procédé qui répond à une double préoccupation :
- protection de l'environnement sans transfert de pollution,
- récupération d'éléments valorisables à partir de piles usagées, ne nécessitant pas de calcination et applicable à un mélange non trié de piles ayant des compositions différentes.

Les différents modes d'attaque directe soit acide soit basique sans réduction des oxydes de manganèse laissent un résidu encore chargé en mercure.
L'utilisation d'un dispositif comprenant un oscillateur à ultrason ou « sonotrode » immergé dans le réacteur, permet de palier aux inconvénients cités.

L'utilisation d'ultrasons durant la réaction de lixiviation permet d'accroître le taux d'extraction du mercure grâce aux phénomènes de micro cavitations et d'effets thermiques microscopiques générés par l'onde ultrasonore.

Quelque soit l'acide utilisé, l'attaque des piles conduit, à une solution mixte de zinc et de manganèse.

Seule une électrolyse comme décrite dans EP 0 620 607 B1 RECUPYL permet actuellement de séparer efficacement entre le zinc et le manganèse qui est alors obtenu soit sous forme de dioxyde de manganèse soit sous forme de manganèse selon la configuration de la cellule et selon le pH de la solution.

Ces installations exigent une technicité élevée et un investissement conséquant qui se justifie surtout pour des tonnages importants à l'entrée.

Afin de palier à cet inconvénient et de pouvoir proposer un procédé mis en oeuvre au moyen d'un investissement économiquement acceptable quelle que soit la capacité installée, la présente invention offre une alternative qui consiste en une séparation entre le zinc et le manganèse et une valorisation sous forme de produits de large utilisation.

Par cette technologie, il est possible de répondre au principe de proximité en permettant l'émergence d'installation de faible capacité qui restent toutefois rentables par la valorisation des produits sortants vers des marchés traditionnels bien établis.

### Description du perfectionnement apporté:

Le procédé de traitement de piles usagées de la présente invention est un procédé dans lequel on soumet les piles usagées à un traitement mécanique en vue de disloquer les enveloppes des piles, puis à un tri magnétique en vue de séparer les métaux ferreux des métaux non ferreux Hg, Mn, Zn, Cd et Ni, puis on soumet la fraction débarrassée des métaux ferreux à un lavage en vue de dissoudre les sels solubles.

Le broyage est effectué dans un broyeur à disques dentés, de préférence à froid sous un courant d'air enrichi d'azote gazeux froid. Le broyage provoque la dislocation de l'enveloppe métallique des piles et la réduction des tôles ferreuses à des tailles compatibles avec les opérations ultérieures.

La charge obtenue après broyage est passée sur un crible de maille égale à 3 mm. La fraction composant le refus est soumise à un premier tri magnétique au moyen d'une poulie magnétique à aimant en ferrites pour séparer la fraction ferreuse du refus. La seconde fraction de ce refus se compose alors de papier et plastique. La partie fine (donc le passant au crible) est soumise à un second traitement magnétique sur un tambour magnétique à aimants en terres rares pour récupérer les fines ferreuses. L'ensemble de l'installation mécanique est en dépression et relié à un système de traitement des gaz et poussières.

Les charges minérales fines obtenues après séparation magnétique et criblage renferment les oxydes et métaux non-ferreux ainsi que l'électrolyte, principalement sous forme de potasse, de chlorure de zinc et d'ammonium.
La suite des opérations décrites dans la présente invention peut être indifféremment effectuées sur une charge provenant d'un broyage ou sur une charge issue d'un traitement thermique des piles.
Pour extraire efficacement les électrolytes, une opération de lessivage s'avère nécessaire. Cette opération de lessivage revêt une importance capitale dans la mesure où elle permet :
- d'accélérer la dissolution des sels solubles,
- de révéler les fractions métalliques qui sont masquées par les oxydes absorbés en surface.
Cette opération peut avantageusement être effectuée dans un réacteur d'attrition.

Dans ce cas l'énergie nécessaire à la désorption des particules fines est apportée par un agitateur à plusieurs pales et dont l'orientation permet le renversement du courant de la solution liquide-solide en suspension ou pulpe. L'association du nombre de mobiles d'agitation et de la forme de la cuve de réaction permet d'optimiser l'attrition. Dans notre cas une cuve octogonale permet de contrôler l'efficacité de cette opération.
Le frottement intensif des particules entre elles selon une turbulence contrôlée permet de détacher au mieux les fractions les plus fines et les sels absorbés sur les grosses particules. Pour optimiser cette friction de particule, il est nécessaire d'ajuster la concentration de la solution.
Le rapport solide/liquide est judicieusement choisi pour permettre cette friction convenable entre les particules solides tout en offrant un volume suffisant pour assurer la pré-dissolution des fractions solubles.

Après l'opération d'attrition, la charge est alors suffisamment diluée pour achever la dissolution des sels, mettre en suspension les particules très fines et assurer une densité de pulpe adaptée à une classification hydraulique. Après filtration, on soumet les boues minérales denses à une lixiviation par l'acide sulfurique conduisant à la mise en solution des composants des électrodes des piles broyées. La réaction est assez exothermique et maintient une température adaptée au processus réactionnel.

Cette étape est caractérisée en ce que :
- l'attaque est effectuée au moyen d'acide sulfurique concentré à un pH suffisamment bas pour dissoudre la majorité des métaux composant le mélange de piles. Cette étape concerne les métaux divalents et le manganèse réduit et sous forme divalente.
- Afin de passer en solution le manganèse de valence III et IV, cette dissolution acide est effectuée en présence de tout agent réducteur vis à vis du dioxyde de manganèse dans l'échelle des potentiels d'oxydo-réduction. Ce réducteur est avantageusement choisit parmi l'eau oxygénée, la grenaille d'acier, la limaille de fer ou le sulfate de fer ferreux. Cette opération permet de récupérer l'intégralité du manganèse mis en oeuvre dans les piles.
- l'extraction du mercure emprisonné dans la masse noire et dans le zinc sous forme d'amalgame est augmentée grâce à l'action d'une onde ultrasonore générée par une sonde appelée "sonotrode" immergée dans le bain de lixiviation.

Après séparation des résidus carbonés insolubles en milieu acide, la solution claire est soumise à un traitement de purification qui comprend :
- l'élimination des composés du mercure, effectuée :
   ◆ dans un premier mode d'application par un réactif collecteur sélectif de ce métal qui est le 2,5 dimercapto thia diazol
   ◆ dans un second mode d'application par cémentation à la poudre de zinc à température ambiante.
- l'élimination des métaux plus électropositifs que le zinc (notamment cuivre, nickel, plomb, cadmium et indium) effectuée par cémentation à chaud au moyen de poudre de zinc

La solution de sulfate mixte ainsi obtenue est neutralisée au moyen de carbonate ammonique en présence d'ammoniaque. Les concentrations des composés sont en relation stoechiométrique avec les teneurs initiales en ions zinc et manganèse présents dans la solution.

Le pouvoir complexant des ions ammonium permet de masquer le zinc qui reste en solution et de précipiter le manganèse sous forme de carbonate.

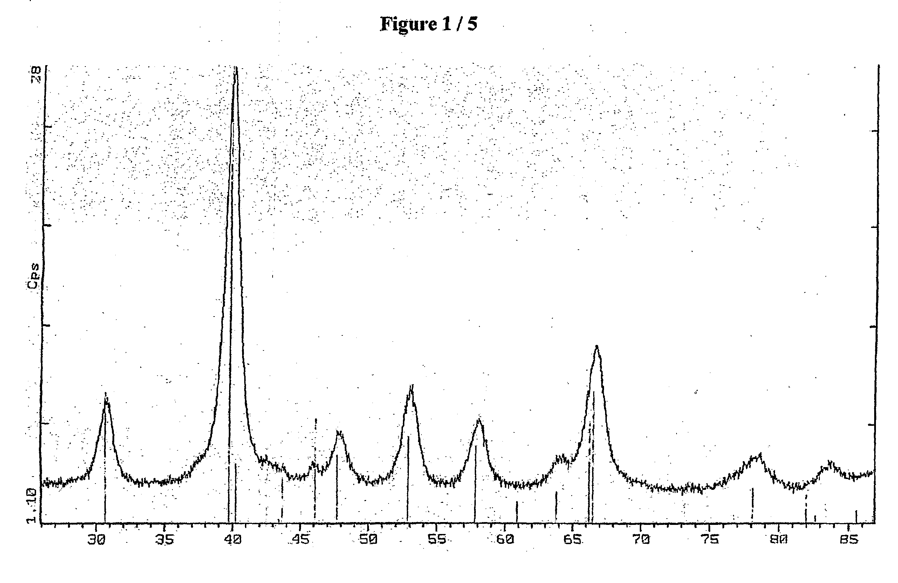

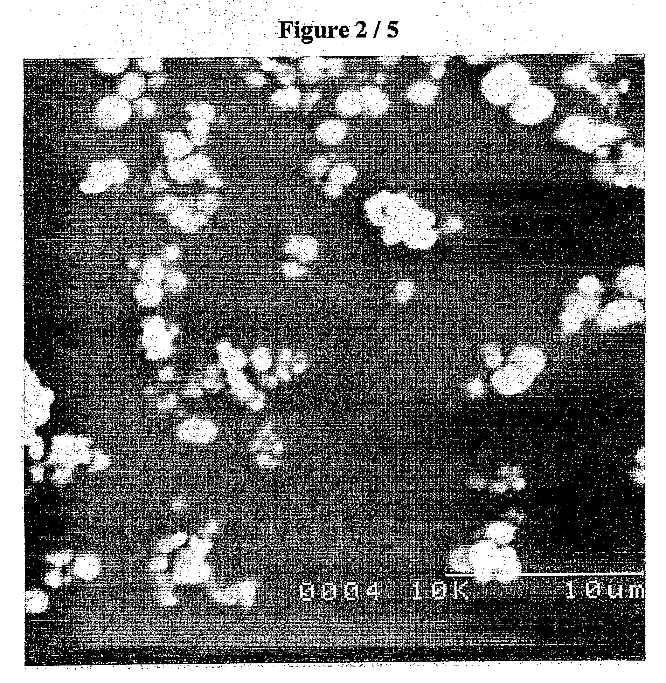

La carbonate de manganèse est filtré, rincé et séché. Le contrôle de sa pureté par analyse et par diffraction des rayons X (figure 1) montre que la phase est pure et qu'il n'y a pas de contamination par du sulfate de manganèse, du sulfate de zinc ou des oxydes de manganèse de valences supérieures (qui ont tendance à se former lors du séchage). La précipitation chimique a permis la production de carbonate de manganèse mono disperse avec une granulométrie assez homogène et des formes de grains relativement sphériques comme le montre la figure 2.

Dans un autre mode de valorisation, le carbonate de manganèse est mis en contact avec l'acide approprié pour produire le sel correspondant.

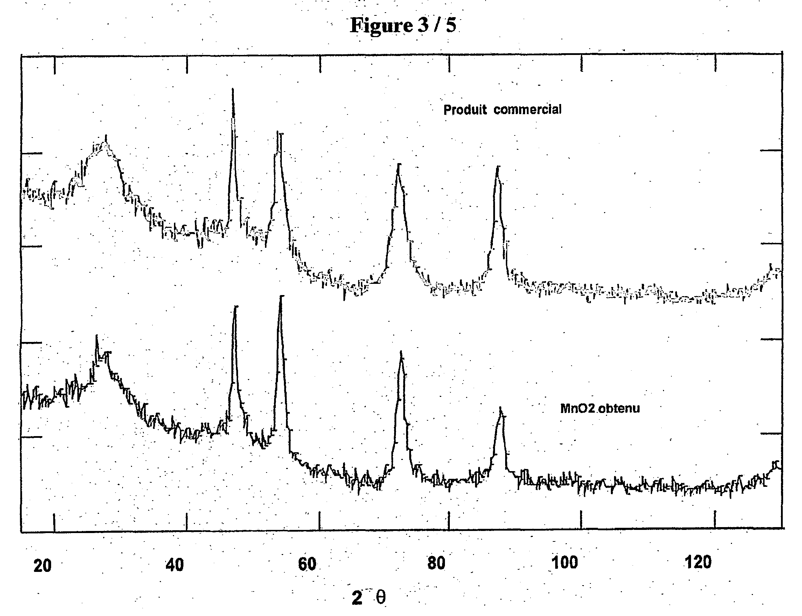

Un exemple d'application sans que cela soit exhaustif, consiste à dissoudre la carbonate de manganèse au moyen d'acide sulfurique pour produire du sulfate de manganèse en solution.
Outre les applications traditionnelles de ce sulfate, il sert également de solution de départ pour l'obtention électrochimique de dioxyde de manganèse de structure adaptée à son utilisation comme matériaux cathodique dans les piles salines et alcalines. Le produit obtenu par oxydation anodique de la solution de MnSO₄ sous 20 mA/cm² et à 90°C s'indexe parfaitement comme un dioxyde type *nsutite* γMnO₂ (figure 3).

Dans un autre mode de mise en oeuvre de la présente invention, la solution de zinc est soumise à un chauffage suffisant pour permettre la libération de l'ammoniac gazeux qui est récupéré et réutilisé dans le procédé. Le zinc restant sous forme d'un sel pur car exempt de manganèse et de métaux lourds.

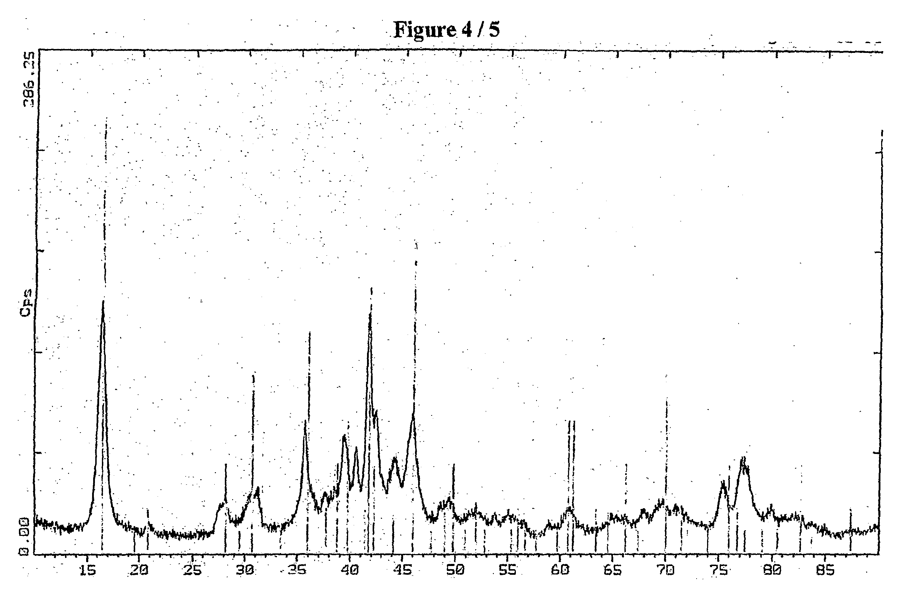

Un mode de mise en oeuvre de la présente invention qui concerne la solution de zinc consiste à neutraliser la présente solution au moyen de gaz carbonique. Ce barbotage jusqu'à pH 7,3 conduit à la formation d'un précipité de carbonate de zinc dans la composition est celle d'une hydrozincite (figure 4).

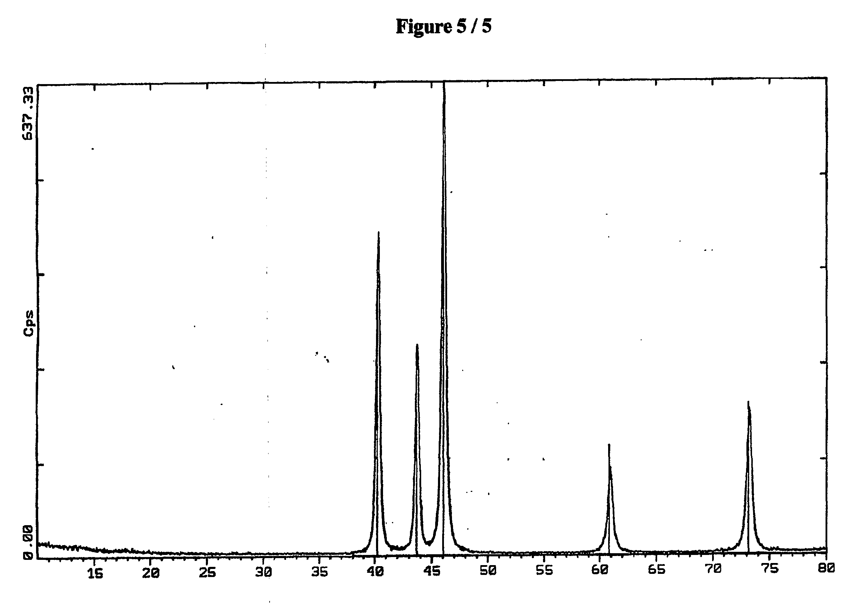

Un traitement thermique de l'hydrozincite conduit à la formation d'un oxyde de zinc blanc, pur et parfaitement cristallisé comme le montre son spectre de diffraction aux rayons X reporté sur la figure 5.

## Revendications

1. Procédé de traitement de piles électriques usagées en vue de la récupération des éléments valorisables, **caractérisé en ce que** la fraction issue d'un broyage après séparation magnétique des fractions métalliques ou d'un traitement thermique quelconque est soumise à :
• un lavage alcalin en vue d'éliminer les sels solubles par une opération d'attrition,
• une lixiviation par l'acide sulfurique assistée par une onde ultra sonore en présence d'un agent réducteur,
• une purification séparée du mercure en solution,
• une élimination des autres métaux lourds,
• une séparation entre le zinc et le manganèse qui sont récupérés sous forme de sels basiques ou neutres.

2. Procédé, selon la revendication 1, **caractérisé en ce que** l'agent réducteur est choisi parmi l'eau oxygénée ou les composés à base de fer comme la grenaille d'acier, la limaille de fer ou le sulfate ferreux.

3. Procédé, selon la revendication 1, **caractérisé en ce que** le mercure est récupéré d'une manière sélective en milieu acide et indépendamment des autres métaux, au moyen du 2,5 dimercapto thiadiazole ou de poudre de zinc à température ambiante.

4. Procédé, selon la revendication 1, **caractérisé en ce que** les autres métaux lourds sont séparés par une opération de cémentation à chaud au moyen de poudre de zinc.

5. Procédé, selon la revendication 1, **caractérisé en ce que** la solution issue de la lixiviation acide et des deux étapes de purification est traitée au moyen d'un mélange de carbonate d'ammonium et d'ammoniaque.

6. Procédé, selon les revendications 1 à 5, **caractérisé en ce que** le manganèse est séparé sous forme de carbonate de manganèse ayant une faible teneur en zinc et exempt d'autres sels ou oxydes de manganèse.

7. Procédé, selon les revendications 1 à 5, **caractérisé en ce que** le zinc est séparé sous forme d'un complexe soluble de zinc ammoniac ayant une très faible teneur en manganèse.

8. Procédé, selon la revendication 7, **caractérisé en ce que** le complexe soluble de zinc ammoniac est soumis à un chauffage suffisant pour permettre le départ de l'ammoniac gazeux et laissant un sel de zinc pur.

9. Procédé, selon la revendication 7, **caractérisé en ce que** le complexe soluble de zinc ammoniac est soumis à une neutralisation au moyen de gaz carbonique pour précipiter le zinc sous forme d'hydrozincite.

10. Procédé selon la revendication 6 **caractérisé en ce que** le carbonate de manganèse obtenu est mis en solution au moyen d'acide sulfurique afin d'être utilisé en l'état.

11. Procédé selon la revendication 10 **caractérisé en ce que** le sulfate de manganèse obtenu est transformé par oxydation anodique en dioxyde de manganèse type gamma-MnO2 au moyen d'une électrolyse.

## Claims

1. A treatment method of used electric batteries in order to recover the valuable elements, **characterized in that** the fraction resulting from crushing after magnetic separation of the magnetic fractions or from any heat treatment is subjected to:
- alkaline washing in order to eliminate the soluble salts by an attrition operation,
- leaching by sulphuric acid assisted by an ultrasonic wave in the presence of a reducing agent,
- separate purification of the mercury in solution,
- elimination of the other heavy metals,
- separation between the zinc and the manganese which are recovered in the form of basic or neutral salts.

2. The method according to claim 1, **characterized in that** the reducing agent is selected from hydrogen peroxide or iron-based compounds such as steel shot, iron filings or ferrous sulphate.

3. The method according to claim 1, **characterized in that** the mercury is recovered in selective manner in an acid medium and independently from the other metals by means of 2,5 dimercaptothiadiazole or of zinc powder at ambient temperature

4. The method according to claim 1, **characterized in that** the other heavy metals are separated by a hot cementation operation by means of zinc powder.

5. The method according to claim 1, **characterized in that** the solution resulting from the acid leaching and from the two purification steps is treated by means of a mixture of ammonium carbonate and ammonia.

6. The method according to claims 1 to 5, **characterized in that** the manganese is separated in the form of manganese carbonate having a low zinc content and exempt of other salts or manganese oxides.

7. The method according to claims 1 to 5, **characterized in that** the zinc is separated in the form of a soluble complex of ammoniac zinc with a very low manganese content.

8. The method according to claim 7, **characterized in that** the soluble complex of ammoniac zinc is subjected to sufficient heating to enable the gaseous ammonia to depart leaving a pure zinc salt.

9. The method according to claim 7, **characterized in that** the soluble complex of ammoniac zinc is subjected to neutralization by means of carbon dioxide to precipitate the zinc in the form of hydrozincite.

10. The method according to claim 6, **characterized in that** the manganese carbonate obtained is converted into solution by means of sulphuric acid in order to be used as-is.

11. The method according to claim 10, **characterized in that** the manganese sulfate obtained is transformed by anodic oxidation into gamma-MnO2 type manganese dioxide by means of an electrolysis.

## Patentansprüche

1. Verfahren zur Behandlung gebrauchter elektrischer Batterien im Hinblick auf die Wiederverwertung ihrer verwertbaren Bestandteile, **dadurch gekennzeichnet, dass** der nach einem Zerkleinerungsvorgang nach magnetischer Trennung der Metallfraktionen oder einer beliebigen Wärmebehandlung erhaltene Teil folgender Behandlung unterzogen wird:
• einem alkalischen Spülen zum Entfernen der löslichen Salze mittels eines Abriebsvorgangs,
• einer Laugung mittels Schwefelsäure, unterstützt durch Ultraschallwellen in Gegenwart eines Reduktionsmittels,
• einer getrennten Reinigung des in Lösung vorhandenen Quecksilbers,
• einer Entfernung der übrigen Schwermetalle,
• einer Trennung zwischen Zink und Mangan, die in Form basischer oder neutraler Salze aufgefangen werden.

2. Verfahren nach Anspruch 1, **dadurch gekennzeichnet, dass** das Reduktionsmittel aus der von Wasserstoffperoxid und den Verbindungen auf Eisenbasis wie Stahlkies, Eisenfeilicht oder Eisensulfat gebildeten Gruppe ausgewählt ist.

3. Verfahren nach Anspruch 1, **dadurch gekennzeichnet, dass** das Quecksilber selektiv in saurem Milieu und getrennt von den anderen Metallen aufgefangen wird, mitttels Dimercaptothiadiazol 2,5 oder Zinkpulver auf Umgebungstemperatur.

4. Verfahren nach Anspruch 1, **dadurch gekennzeichnet, dass** die übrigen Schwermetalle durch einen Heiß-Zementierungsschritt mittels Zinkpulver herausgelöst werden.

5. Verfahren nach Anspruch 1, **dadurch gekennzeichnet, dass** die aus der sauren Laugung und den beiden Reinigungsschritten hervorgegangene Lösung mit einem Ammoniumkarbonat-Ammoniak-Gemisch behandelt.

6. Verfahren nach Anspruch 1 bis 5, **dadurch gekennzeichnet, dass** das Mangan in Form von Mangankarbonat abgeschieden wird, das wenig Zink und keine anderen Salze oder Manganoxide enthält.

7. Verfahren nach Anspruch 1 bis 5, **dadurch gekennzeichnet, dass** das Zink in Form eines löslichen Komplexes aus Zink und Ammoniak mit einem sehr geringen Mangangehalt abgeschieden wird.

8. Verfahren nach Anspruch 7, **dadurch gekennzeichnet, dass** der lösliche Komplex aus Zink und Ammoniak ausreichend erhitzt wird, damit das gasförmige Ammoniak entweichen kann und ein reines Zinksalz übrigbleibt.

9. Verfahren nach Anspruch 7, **dadurch gekennzeichnet, dass** der Zink-Ammoniak-Komplex einer Neutralisierung mittels Kohlendioxid unterzogen wird, um das Zink in Form von Hydrozinkit abzuscheiden.

10. Verfahren nach Anspruch 6, **dadurch gekennzeichnet, dass** das erhaltene Mangankarbonat mittels Schwefelsäure in Lösung gebracht wird, damit es in diesem Zustand verwendet werden kann.

11. Verfahren nach Anspruch 10, **dadurch gekennzeichnet, dass** das erhaltene Mangansulfat durch anodische Oxidation mittels einer Elektrolyse in Mangandioxid des Typs Gamma-Mn02 umgewandelt wird.
